# EUROPEAN PATENT SPECIFICATION

(11) **EP 3 457 748 B1**
(45) Date of publication and mention of the grant of the patent: **26.08.2020**
(21) Application number: 16901951.0
(22) Date of filing: 16.05.2016
(51) Int. Cl.: H04W 36/00, H04L 29/08

(54) **COMMUNICATION METHOD AND APPARATUS DURING SWITCHING**
KOMMUNIKATIONSVERFAHREN UND -VORRICHTUNG WÄHREND DES UMSCHALTENS
PROCÉDÉ ET APPAREIL DE COMMUNICATION PENDANT UNE COMMUTATION

(43) Date of publication of application: 20.03.2019
(73) Proprietor: Huawei Technologies Co., Ltd., Longgang District Shenzhen, Guangdong 518129 (CN)
(72) Inventor: LU, Wei, Shenzhen Guangdong 518129 (CN); JIN, Weisheng, Shenzhen Guangdong 518129 (CN)
(74) Representative: Gill Jennings & Every LLP
(86) International application number: PCT/CN2016/082222
(87) International publication number: WO 2017/197565

(56) References cited:
- EP-A1- 2 953 400
- WO-A1-2011/153889
- CN-A- 103 747 494
- CN-A- 103 796 262
- CN-A- 105 491 625
- US-A1- 2013 336 286
- FABIO GIUST: NEC EUROPE LTD: "MEC MOBILITY MANAGEMENT;MEC(15)000165_MEC_mobility_mana gement", ETSI DRAFT; MEC(15)000165_MEC_MOBILITY_MANAGEMENT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - MEC, 14 July 2015 (2015-07-14), pages 1-10, XP014250180, [retrieved on 2015-07-14]
- "Mobile-Edge Computing;Mobile-edge_Computing_-_Introduc tory_Technical_White_Paper_V1 18-09-14", ETSI DRAFT; MOBILE-EDGE_COMPUTING_-_INTRODUCTORY_TECHN ICAL_WHITE_PAPER_V1 18-09-14, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. LI - LI_am, 16 December 2014 (2014-12-16), pages 1-36, XP014232595, [retrieved on 2014-12-16]

## Description

### TECHNICAL FIELD

The present invention relates to the field of communications technologies, and in particular, to a communication method in a handover process and an apparatus.

### BACKGROUND

To enhance service experience of a user, a Mobile Edge Computing (Mobile Edge Computing, MEC for short) network element can be deployed near an access network. The MEC network element may be also referred to as a MEC platform. The MEC network element has computation and storage capabilities, and can obtain a data packet of a terminal, and route the data packet after processing the data packet.

The MEC network element may be separately connected to an evolved NodeB (Evolved NodeB, eNB or eNodeB for short) (which may be referred to as an attachment to the eNB), or connected to an S1 user plane interface (an S1-U interface) between the eNB and a gateway device. When the terminal is handed over between eNBs, there is no related solution for the MEC network element to deal with the handover of the terminal currently.
EP 2953400 and US 2013/336286 both disclose communication methods in handover processes.

### SUMMARY

Embodiments of the present invention provide a communication method in a handover process and an apparatus, so that when a terminal is handed over between access network devices, routing of a data stream between a MEC network element and the terminal can be adjusted in time, thereby preventing data stream interrupt.

According to one aspect, an embodiment of the present invention provides a communication method in a handover process, comprising: when a terminal is handed over from a source access network device to a target access network device, receiving, by a Mobile Edge Computing, MEC, network element, address information of the target access network device that is sent by the target access network device; and changing, by the MEC network element, stored address information of the source access network device to the address information of the target access network device, wherein the receiving, by a MEC network element, address information of the target access network device that is sent by the target access network device comprises: receiving, by the MEC network element, a message sent by the target access network device, wherein the message carries the address information of the target access network device, and the message further carries address information of a gateway device corresponding to the target access network device; and the communication method further comprises: changing, by the MEC network element, stored address information of a gateway device corresponding to the source access network device to the address information of the gateway device corresponding to the target access network device.

In a possible design, the address information of the target access network device may be carried in a message sent by the target access network device to the MEC network element. For example, the MEC network element receives a session modification request message sent by the target access network device, and the session modification request message includes the address information of the target access network device. The session modification request message may be used to request the MEC network element to change the stored address information of the source access network device to the address information of the target access network device.

In a possible design, the MEC network element may further receive identification information of the terminal that is sent by the target access network device.

In this embodiment of the present invention, when the terminal is handed over from the source access network device to the target access network device, the MEC network element receives the address information of the target access network device that is sent by the target access network device, and changes the stored address information of the source access network device to the address information of the target access network device. In this way, routing of a data stream between the MEC network element and the terminal can be adjusted in time, thereby preventing data stream interrupt.

In a possible design, the method further includes: receiving, by the MEC network element, address information of a gateway device corresponding to the target access network device that is sent by the target access network device; and changing, by the MEC network element, stored address information of a gateway device corresponding to the source access network device to the address information of the gateway device corresponding to the target access network device.

In a possible design, the address information of the gateway device corresponding to the target access network device may be carried in a message sent by the target access network device to the MEC network element. For example, the MEC network element receives the session modification request message sent by the target access network device, and the session modification request message includes the address information of the target gateway device. The session modification request message may be used to request the MEC network element to change the stored address information of the source gateway device to the address information of the target gateway device.

In a possible design, the receiving, by a MEC network element, address information of the target access network device that is sent by the target access network device includes: receiving, by the MEC network element, a message sent by the target access network device, where the message carries the address information of the target access network device, and the message further carries address information of a gateway device corresponding to the target access network device; and the communication method further includes: changing, by the MEC network element, stored address information of a gateway device corresponding to the source access network device to the address information of the gateway device corresponding to the target access network device.

According to another aspect, an embodiment of the present invention provides a communication method in a handover process, comprising: when a terminal is handed over from a source access network device to a target access network device, obtaining, by the target access network device, address information of a Mobile Edge Computing MEC network element; and sending, by the target access network device, address information of the target access network device to the MEC network element based on the address information of the MEC network element, so that the MEC network element changes stored address information of the source access network device to the address information of the target access network device, further comprising: notifying, by the target access network device through a mobility management network element, a gateway device corresponding to the target access network device of the address information of the MEC network element.

In a possible design, the address information of the target access network device may be carried in a message sent by the target access network device to the MEC network element. For example, the target access network device sends a session modification request message to the MEC network element, and the session modification request message includes the address information of the target access network device. The session modification request message may be used to request the MEC network element to change the stored address information of the source base station to the address information of the target base station.

In this embodiment of the present invention, when the terminal is handed over from the source access network device to the target access network device, the target access network device sends the address information of the target access network device to the MEC network element, so that the MEC network element changes the stored address information of the source access network device to the address information of the target access network device. In this way, routing of a data stream between the MEC network element and the terminal can be adjusted in time, thereby preventing data stream interrupt.

In a possible design, the method further includes: sending, by the target access network device to the MEC network element, address information of a gateway device corresponding to the target access network device, so that the MEC network element changes stored address information of a gateway device corresponding to the source access network device to the address information of the gateway device corresponding to the target access network device.

The address information of the gateway device corresponding to the target access network device may be carried in a message sent by the mobility management network element to the target access network device.

In a possible design, the method further includes: notifying, by the target access network device through a mobility management network element, a gateway device corresponding to the target access network device of the address information of the MEC network element.

In a possible design, the obtaining, by the target access network device, address information of a MEC network element includes: receiving, by the target access network device, the address information of the MEC network element that is sent by the source access network device; or receiving, by the target access network device, the address information of the MEC network element that is sent by a mobility management network element.

According to still another aspect, an embodiment of the present invention provides a Mobile Edge Computing, MEC, network element, comprising a processing unit and a communications unit, wherein the processing unit is configured to: when a terminal is handed over from a source access network device to a target access network device, receive, by using the communications unit, address information of the target access network device that is sent by the target access network device; and change stored address information of the source access network device to the address information of the target access network device, wherein the processing unit is specifically configured to: receive, by using the communications unit, a message sent by the target access network device, wherein the message carries the address information of the target access network device, and the message further carries address information of a gateway device corresponding to the target access network device; and change stored address information of a gateway device corresponding to the source access network device to the address information of the gateway device corresponding to the target access network device.

In a possible design, the MEC network element includes a processing unit and a communications unit, and the processing unit is configured to support the MEC network element in executing a corresponding function in the foregoing method. The communications unit is configured to support the MEC network element in communicating with other devices. The MEC network element may further include a storage unit. The storage unit is configured to couple to the processing unit, and stores necessary program instructions and data of the MEC network element. In an example, the processing unit may be a processor, the communications unit may be a communications interface, and the storage unit may be a memory.

According to still another aspect, an embodiment of the present invention provides an access network device, comprising a processing unit and a communications unit, wherein the processing unit is configured to: when a terminal is handed over from a source access network device to the access network device, obtain, by using the communications unit, address information of a Mobile Edge Computing MEC network element; and send, by using the communications unit, address information of the access network device to the MEC network element based on the address information of the MEC network element, so that the MEC network element changes stored address information of the source access network device to the address information of the target access network device, wherein the processing unit is further configured to notify, through a mobility management network element, a gateway device corresponding to the target access network device of the address information of the MEC network element.

In a possible design, the access network device includes a processing unit and a communications unit, and the processing unit is configured to support the MEC network element in executing a corresponding function in the foregoing method. The communications unit is configured to support the MEC network element in communicating with other devices. The access network device may further include a storage unit. The storage unit is configured to couple to the processing unit, and stores necessary program instructions and data of the access network device. In an example, the processing unit may be a processor, the communications unit may be a communications interface, and the storage unit may be a memory.

According to still another aspect, an embodiment of the present invention provides a communications system, and the communications system includes the MEC network element and the access network device described in the foregoing aspects.

According to yet another aspect, an embodiment of the present invention provides a computer readable storage medium, configured to store a computer software instruction used by the foregoing MEC network element, where the computer software instruction includes a program designed to execute the foregoing aspects.

According to yet another aspect, an embodiment of the present invention provides a computer readable storage medium, configured to store a computer software instruction used by the foregoing access network device, where the computer software instruction includes a program designed to execute the foregoing aspects.

In the embodiments of the present invention, when the terminal is handed over from the source access network device to the target access network device, the target access network device obtains the address information of the MEC network element, and sends the address information of the target access network device to the MEC network element, so that the MEC network element changes the stored address information of the source access network device to the address information of the target access network device. In this way, routing of a data stream between the MEC network element and the terminal can be adjusted in time, thereby preventing data stream interrupt.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may derive other drawings from these accompanying drawings without creative efforts.
FIG. 1 is a schematic diagram of a possible system architecture according to an embodiment of the present invention;
FIG. 2A is a schematic diagram of a possible application scenario according to an embodiment of the present invention;
FIG. 2B is a schematic diagram of another possible application scenario according to an embodiment of the present invention;
FIG. 3 is a schematic diagram of data stream transmission according to an embodiment of the present invention;
FIG. 4 is a schematic diagram of a communication method in a handover process according to an embodiment of the present invention;
FIG. 5 is a schematic diagram of another communication method in a handover process according to an embodiment of the present invention;
FIG. 6 is a schematic diagram of still another communication method in a handover process according to an embodiment of the present invention;
FIG. 7 is a schematic diagram of still another communication method in a handover process according to an embodiment of the present invention;
FIG. 8 is a schematic diagram of still another communication method in a handover process according to an embodiment of the present invention;
FIG. 9 is a schematic diagram of still another communication method in a handover process according to an embodiment of the present invention;
FIG. 10A and FIG. 10B are a schematic diagram of still another communication method in a handover process according to an embodiment of the present invention;
FIG. 11 is a schematic block diagram of a MEC network element according to an embodiment of the present invention;
FIG. 12 is a schematic block diagram of another MEC network element according to an embodiment of the present invention;
FIG. 13 is a schematic block diagram of an access network device according to an embodiment of the present invention; and
FIG. 14 is a schematic block diagram of another access network device according to an embodiment of the present invention.

### DESCRIPTION OF EMBODIMENTS

To make the purpose, technical solutions, and advantages of the embodiments of the present invention clearer, the following describes the technical solutions of the embodiments of the present invention with reference to the accompanying drawings in the embodiments of the present invention.

Network architectures and service scenarios described in the embodiments of the present invention are intended to more clearly describe the technical solutions in the embodiments of the present invention, but are not intended to limit the technical solutions provided in the embodiments of the present invention. A person of ordinary skill in the art may know that as the network architectures evolve and a new business scenario emerges, the technical solutions provided in the embodiments of the present invention are further applicable to a similar technical problem.

In the embodiments of the present invention, nouns "network" and "system" are often interchangeably used, but meanings of the nouns can be understood by a person skilled in the art. A terminal involved in the embodiments of the present invention may include various handheld devices, in-vehicle devices, wearable devices, or computing devices that have a wireless communication function, or other processing devices connected to a wireless modem, and user equipment (User Equipment, UE), a mobile station (Mobile Station, MS), a terminal device (terminal device) that are in various forms, and the like. For ease of description, the devices mentioned above are collectively referred to as terminals. An access network device involved in the embodiments of the present invention may be a base station (Base Station, BS). The base station is an apparatus that is deployed in a radio access network and that is configured to provide a wireless communication function for the terminal. The base station may include a macro base station, a micro base station, a regeneration station, and an access point that are in various forms, and the like. In systems that use different radio access technologies, names of devices that have a base station function may be different. For example, in a Long Term Evolution (Long Term Evolution, LTE) system, the device is referred to as an evolved NodeB (evolved NodeB, eNB or eNodeB); in a 3G communications system, the device is referred to as a NodeB (NodeB); or the like. For ease of description, in the embodiments of the present invention, the foregoing apparatuses that provide the wireless communication function for the terminal are collectively referred to as a base station or a BS.

A mobility management network element may be a mobility management entity (Mobility Management Entity, MME for short) or a general packet radio system (General Packet Radio System, GPRS for short) serving GPRS support node (Serving GPRS Support Node, SGSN for short). This is not limited in the present invention.

For ease of description, the following uses an eNB, an MME, and an S-GW as examples to describe the solution of the embodiments of the present invention. It should be understood that the following uses the eNB as an example to describe the access network device, uses the MME as an example to describe the mobility management network element, and uses the S-GW to describe the gateway device, but the embodiments of the present invention are not limited to a standard presented by these terms. The embodiments of the present invention may also be applied to another standard. These variations shall fall within the scope of the embodiments of the present invention.

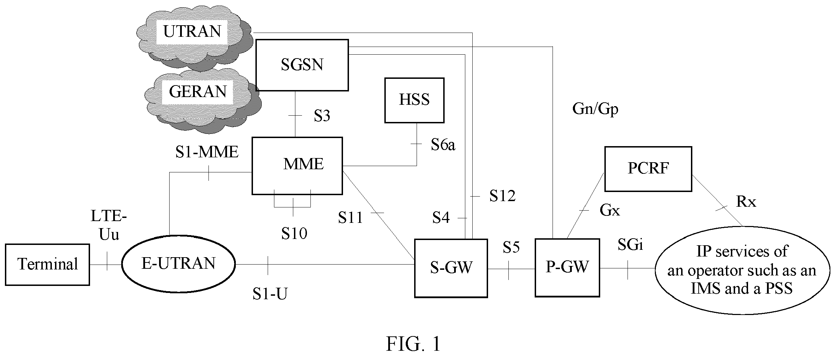

The embodiments of the present invention may be applied to a system architecture shown in FIG. 1. The following first describes main network entities in the system architecture.

An evolved universal terrestrial radio access network (Evolved Universal Terrestrial Radio Access Network, E-UTRAN for short) is a network including a plurality of eNBs, and implements a radio physical layer function, resource scheduling and radio resource management, radio access control, and a mobility management function. An eNB is connected to an S-GW by using an S1-U interface, to transfer user data; and is connected to an MME by using an S1 control plane interface (an S1-MME interface). The eNB uses an S1 application protocol (S1 Application Protocol, S1-AP for short) to implement functions such as radio access bearer control.

An MME is mainly responsible for all control plane functions of a user and session management, including non-access stratum (Non-Access Stratum, NAS for short) signaling and security, tracking area list (Tracking Area List, TAL for short) management, selection of a P-GW and an S-GW, and the like.

An S-GW is mainly responsible for data transmission and forwarding of the terminal, route switching, and the like, and serves as a local mobility anchor used when the terminal is handed over between eNBs.

A packet data network gateway (Packet Data Network Gateway, PDN GW or P-GW for short) is an ingress through which an external network sends data to the terminal, and is responsible for allocation of Internet Protocol (Internet Protocol, IP for short) addresses of the terminal, data packet filtering of the terminal, rate control, charging information generation, and the like.

After the terminal accesses an evolved packet system (Evolved Packet System, EPS for short), the P-GW allocates an IP address (IP address) to the terminal. The terminal implements connection to the external network by using the IP address, to perform data transmission. All uplink data packets of the terminal may be sent to the external network by using the P-GW, and all downlink data packets of the external network may be sent to the terminal by using the P-GW.

The data packets sent or received by the terminal are transmitted in an EPS network by using EPS bearers (bearer for short). Each terminal may have a plurality of bearers, and different bearers can meet quality of service (Quality of Service, QoS for short) requirements of different services. The eNB and the S-GW may store information about each bearer, to be specific, bearer context including S-GW tunnel endpoint identifier (Tunnel Endpoint Identifier, TEID for short) information of the bearer and eNB TEID information. The S-GW TEID is used as a destination address of an uplink data packet sent from the eNB to the S-GW, and the eNB TEID is used as a destination address of a downlink data packet sent from the S-GW to the eNB. The eNB implements bearer context synchronization with the MME by using an S1-AP message, and the S-GW implements bearer context synchronization with the MME by using a GPRS Tunneling Protocol-Control Plane (GPRS Tunneling Protocol-Control Plane, GTP-C for short) message, so as to implement bearer context synchronization between the eNB and the S-GW.

When receiving the uplink data packet of the terminal, the eNB encapsulates the uplink data packet of the terminal into an uplink GPRS Tunneling Protocol-User Plane (GPRS Tunneling Protocol-User Plane, GTP-U for short) packet based on the bearer context. The uplink GTP-U packet includes a GTP-U header, and the GTP-U header includes the S-GW TEID information of the bearer. Different bearers may use different S-GW TEIDs. Therefore, when receiving the uplink GTP-U packet sent by the eNodeB, the S-GW may determine, based on the GTP-U header, a bearer to which the packet belongs; when receiving the downlink data packet sent to the terminal, the S-GW encapsulates the downlink data packet into a downlink GTP-U packet. The downlink GTP-U packet includes a GTP-U header, and the GTP-U header includes eNodeB TEID information of the bearer.

A MEC network element mainly includes a data bus and an application. The data bus is responsible for obtaining a data packet of the terminal and forwarding the data packet to the corresponding application. After processing the data packet, the application may send the packet to the data bus for routing. A plurality of applications may be installed on the MEC network element to enhance user service experience. The application on the MEC network element may intercept data sent by the terminal for modification, detection, forwarding, and the like; or may directly respond to data sent by the terminal. For example, a video cache application may be installed on the MEC network element. When the terminal requests for a video service, the request of the terminal may be processed by the video cache application. If the video cache application does not have a video requested by the terminal, the video cache application continues to forward the user request to the S-GW; or if the video cache application stores a video requested by the terminal, the video cache application directly sends a video data packet to the terminal. Therefore, deploying the MEC network element near the access network to directly respond to the data sent by the terminal may effectively improve user service experience.

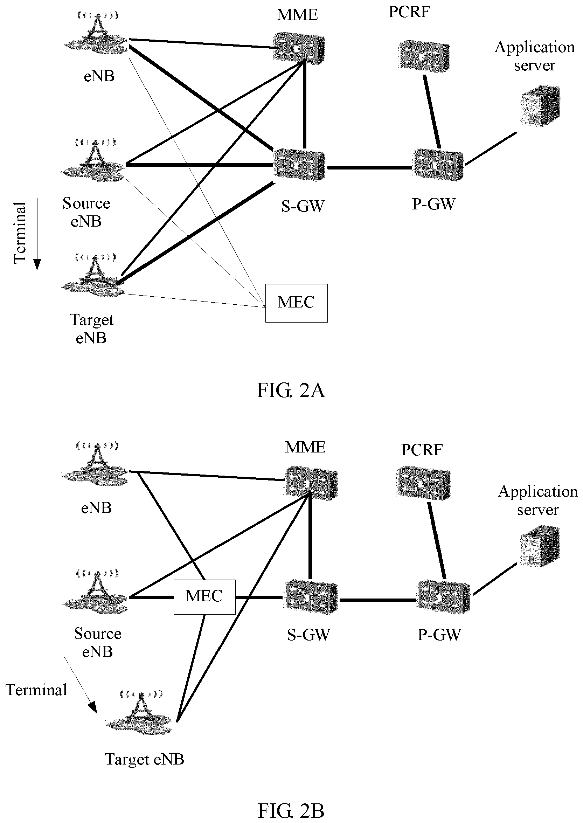

FIG. 2A is a schematic diagram of an application scenario according to an embodiment of the present invention. As shown in FIG. 2A, a MEC network element is attached to an eNB. One MEC network element serves one or more eNBs, and the MEC network element has no connection to a gateway device.

FIG. 2B is a schematic architectural diagram of another application scenario according to an embodiment of the present invention. As shown in FIG. 2B, a MEC network element is connected to an S1-U interface in a serial manner. In a system architecture shown in FIG. 2B, there may be a new interface between the MEC network element and the eNB, so that a connection is established between the MEC network element and the eNB.

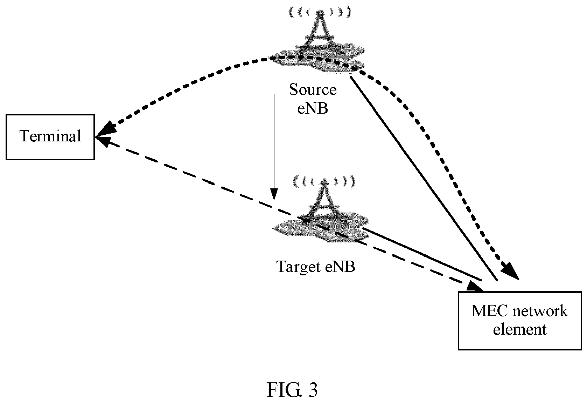

FIG. 3 is a schematic diagram of data stream transmission in the application scenario shown in FIG. 2A. As shown in FIG. 3, for an uplink data stream (a data stream sent from a terminal to the MEC network element):
a data stream route before the terminal is moved is the terminal→a source eNB→the MEC network element; and
a data stream route after the terminal is moved is the terminal→a target eNB→the MEC network element.

Therefore, the target eNB need to obtain address information of the MEC network element, so that the data stream can be correctly routed.

In addition, when receiving a data packet sent by the target eNB, the MEC network element needs to identify a terminal to which the data packet belongs.

For a downlink data stream (a data stream sent from the MEC network element to the terminal):
a data stream route before the terminal is moved is the MEC network element→the source eNB→the terminal; and
a data stream route after the terminal is moved is the MEC network element→the target eNB→the terminal.

Therefore, the MEC network element needs to learn that the data stream of the terminal is handed over from the source eNB to the target eNB, so that a subsequent data stream is sent from the MEC network element to the target eNB instead of the source eNB.

The connection between the MEC network element and the eNB may be an IP connection or a tunnel connection based on a GTP protocol.

The MEC network element and the eNB may obtain address information of each other, to establish a data transmission channel between the MEC network element and the eNB. After obtaining the address information of the MEC network element, the eNB may use the obtained address information of the MEC network element as the address information of the eNB, and notify the S-GW of the obtained address information of the MEC network element by using an MME. In other words, the eNB notifies the S-GW of the address information of the eNB in the prior art; however, in an application scenario of this embodiment of the present invention, the eNB uses the address information of the MEC network element as the address information of the eNB, and notifies the S-GW of the address information of the MEC network element by using the MME. In this case, from a perspective of the S-GW, the MEC network element is used as the eNB.

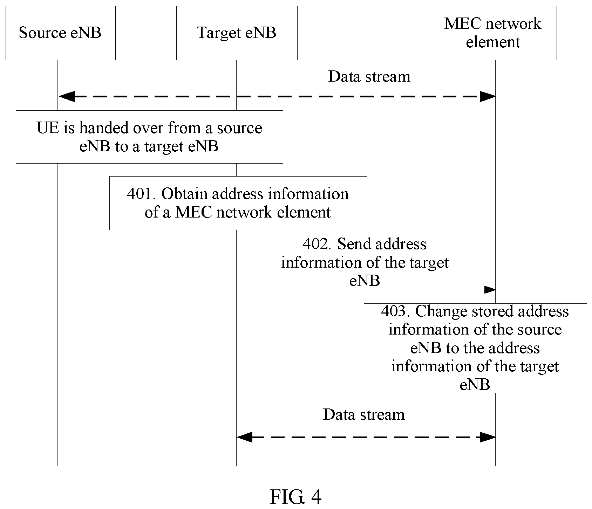

FIG. 4 is a schematic flowchart of a communication method 400 in a handover process according to an embodiment of the present invention. As shown in FIG. 4, the communication method 400 includes the following content.

Before a terminal is handed over between cells, an uplink/a downlink data stream is transmitted between a source eNB serving the terminal and a MEC network element. For the uplink data stream, data of the terminal flows from the source eNB to the MEC network element. After a data packet arrives at the source eNB, optionally, the source eNB adds identification information of the terminal to the data packet. The identification information is used to identify the terminal.

It should be noted that when the terminal initially accesses a network, a gateway device allocates an IP address to the terminal. When the IP address allocated by the gateway device to the terminal is a private network address, different gateways may allocate a same private network addresse to the terminal. If terminals having a same private network address are served by a same eNB, the eNB sends a data packet including a same source address to the MEC network element, and the MEC network element cannot identify that these data streams belong to different terminals. Therefore, in order that the MEC network element can identify the terminal, the eNB adds the identification information of the terminal to an uplink data packet. Likewise, the MEC network element may also add the identification information of the terminal to a downlink data packet. The identification information of the terminal is not limited in this embodiment of the present invention. For example, the identification information of the terminal may be identification information allocated by the eNB to the terminal.

401. When a terminal is handed over from a source eNB to a target eNB, the target eNB obtains address information of a MEC network element.

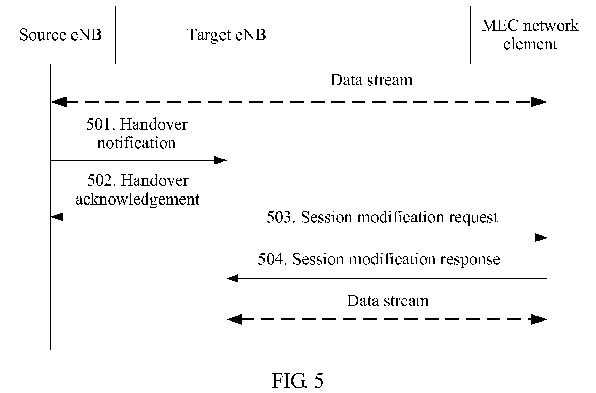

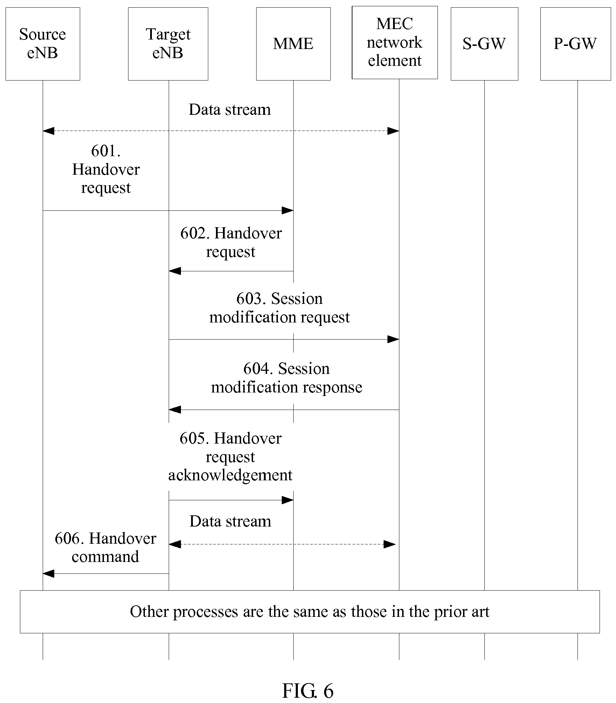

In an example, the address information of the MEC network element may be preconfigured in the target eNB, and the target eNB may obtain the preconfigured address information of the MEC network element; or the target eNB may obtain the address information of the MEC network element from a message sent by the source eNB or an MME, and this is like a solution shown in FIG. 5 or FIG. 6.

In another example, the target eNB may further obtain the address information of the MEC network element based on a correspondence. The correspondence may be a correspondence between the address information of the MEC network element and one of or both of the identification information of the terminal and identification information of the target eNB. For example, a MEC network element query system stores the correspondence, and the address information of the MEC network element may be obtained by querying the MEC network element query system based on the identification information of the terminal and/or the identification information of the target eNB.

In still another example, an IP connection may exist between the MEC network element and the target eNB, and the address information of the MEC network element includes an IP address of the MEC network element; or a tunnel connection based on a GTP may exist between the MEC network element and the target eNB, and the address information of the MEC network element includes an IP address of the MEC network element and a TEID.

402. The target eNB sends address information of the target eNB to the MEC network element based on the address information of the MEC network element.

In an example, the target eNB may further send the identification information of the terminal to the MEC network element. The identification information of the terminal is used to identify the terminal on which handover is performed. Content of the identification information of the terminal is not limited in this embodiment of the present invention provided that the terminal can be identified based on the identification information of the terminal.

For example, the identification information of the terminal may be sent to the MEC network element by the eNB when a connection is established between the eNB and the MEC network element, or may be allocated by the MEC network element to the terminal (in this case, the identification information of the terminal is sent to the eNB by the MEC in an initial stage of connection establishment). Alternatively, one pair of identifiers may be used to identify the terminal. For example, the eNB allocates one identifier (for example, eNB S1-AP Id) to the terminal, and the MEC allocates another identifier (MEC S1-AP Id) to the terminal, so that the pair of identifiers (for example, eNB S1-AP Id/MEC S1-AP Id) can be used on the eNB and the MEC network element to identify the terminal.

403. After the MEC network element receives the address information of the target eNB that is sent by the target eNB, the MEC network element changes stored address information of the source eNB to the address information of the target eNB.

For example, the MEC network element deletes the address information of the source eNB that is stored in a specified location of a memory, and stores the address information of the target eNB in the specified location. Alternatively, the MEC network element replaces, with the address information of the target eNB, the address information of the source eNB that is stored in a specified location of a memory.

In this case, a user plane data transmission channel between the MEC network element and the target eNB may be established. The MEC network element sends the received downlink data packet of the terminal to the target eNB.

In an example, the MEC network element may further receive the downlink data packet of the terminal, and send the downlink data packet to the target eNB based on the address information of the target eNB.

In this embodiment of the present invention, when the terminal is handed over from the source eNB to the target eNB, the target eNB obtains the address information of the MEC network element, and sends the address information of the target eNB to the MEC network element, so that the MEC network element changes the stored address information of the source eNB to the address information of the target eNB. In this way, routing of a data stream between the MEC network element and the terminal can be adjusted in time, thereby preventing data stream interrupt.

If the source eNB and the target eNB are corresponding to different S-GWs, the communication method 400 may further include: changing, by the MEC network element, stored address information of an S-GW corresponding to the source eNB to address information of an S-GW corresponding to the target eNB. In this way, when the S-GW is also changed in the handover process, a connection between the MEC network element and the S-GW can be established in time, thereby preventing data stream interrupt.

Before the MEC network element changes the stored address information of the S-GW corresponding to the source eNB to the address information of the S-GW corresponding to the target eNB, the MEC network element may obtain, in a plurality of manners, the address information of the S-GW corresponding to the target eNB. For example, the MEC network element receives the address information of the S-GW corresponding to the target eNB that is sent by the target eNB.

Alternatively, that the MEC network element receives the address information of the target eNB that is sent by the target eNB in 403 includes: receiving, by the MEC network element, a message sent by the target eNB, where the message carries the address information of the target eNB, and the message further carries address information of a gateway device corresponding to the target eNB. Correspondingly, the MEC network element may obtain, from the message, the address information of the S-GW corresponding to the target eNB.

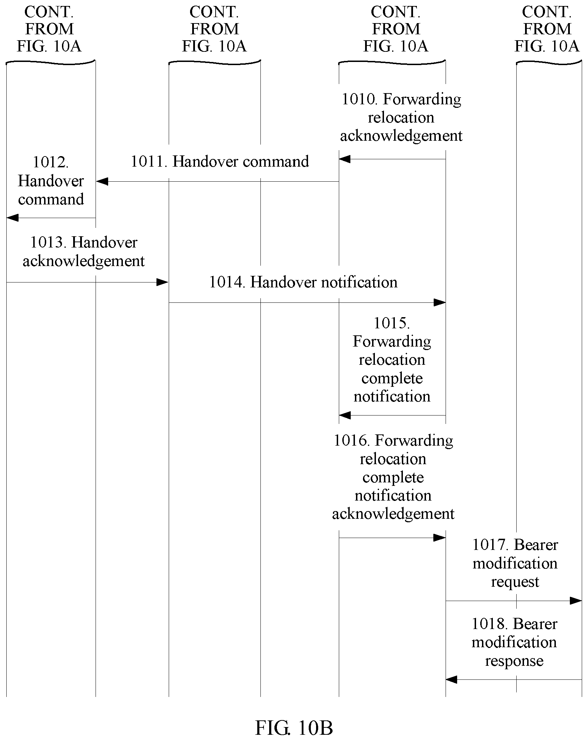

An X2 interface may exist or may not exist between the source eNB and the target eNB. When the X2 interface exists between the source eNB and the target eNB, a handover preparation process may be performed by using the X2 interface, and the source eNB may directly request the target eNB to perform resource reservation. In this way, an MME is not involved in the handover process, to reduce interaction between a wireless side and the MME. When no X2 interface exists between the source eNB and the target eNB, an S1 interface needs to be used to perform handover in an LTE system. Because the source eNB cannot directly communicate with the target eNB, the MME serves as a signaling relay between two eNBs. A signaling handover process is more complex than the handover based on the X2 interface. For details, refer to embodiments shown in FIG. 5 to FIG. 10A and FIG. 10B.

With reference to FIG. 5 and FIG. 6, the following describes in detail application of the communication method in the handover process according to this embodiment of the present invention in the scenario shown in FIG. 2A.

FIG. 5 is a schematic diagram of another communication method 500 in a handover process according to an embodiment of the present invention. The communication method 500 may be applied to a system architecture in which an X2 interface exists between a source eNB and a target eNB.

Before a terminal is handed over between cells, a data stream is transmitted between the source eNB serving the terminal and a MEC network element.

501. When the terminal is handed over from the source eNB to the target eNB, the source eNB sends a handover notification message to the target eNB, where the handover notification message includes identification information of the terminal, and the handover notification message is used to notify that the terminal is handed over to the target eNB.

Optionally, the handover notification message may further include address information of the MEC network element.

Optionally, the address information of the MEC network element may be preconfigured on the eNB. For example, a plurality of eNBs in coverage of one MEC network element may be all configured with address information of a same MEC network element.

502. After receiving the handover notification message, the target eNB sends a handover acknowledgement message to the source eNB.

In this case, the terminal is successfully handed over to the target eNB.

503. The target eNB obtains address information of the MEC network element, and sends a session modification request message to the MEC network element based on the address information of the MEC network element, where the session modification request message includes address information of the target eNB.

Optionally, when the handover notification message in step 501 further includes the address information of the MEC network element, the target eNB may obtain the address information of the MEC network element from the handover notification message.

Optionally, the target eNB may alternatively use another method to obtain the address information of the MEC network element, and details are not described herein.

Optionally, the session modification request message may further include the identification information of the terminal. When the MEC network element receives the message, the MEC network element can identify, based on the identification information of the terminal, the terminal on which handover is performed, and the MEC network element sends a downlink data packet of the terminal to the target eNB.

504. After receiving the session modification request message, the MEC network element changes stored address information of the source eNB to the address information of the target eNB, and sends a session modification response message to the target eNB.

In this case, a user plane data transmission channel between the MEC network element and the target base station may be established, and the data stream is transmitted between the MEC network element and the target eNB.

It should be noted that message names in step 501 to step 504 are not limited in this embodiment of the present invention, and other message names may be alternatively used.

FIG. 6 is a schematic diagram of still another communication method 600 in a handover process according to an embodiment of the present invention. The communication method 600 may be applied to a system architecture in which no X2 interface exists between a source eNB and a target eNB.

Before a terminal is handed over between cells, a data stream is transmitted between a source eNB serving the terminal and a MEC network element.

601. When the terminal is handed over between cells, the source eNB sends a handover request message to an MME, where the handover request message includes identification information of the terminal.

The handover request message may be used to request the terminal to be handed over from the source eNB to another eNB.

Optionally, the handover request message includes address information of the MEC network element.

602. The MME sends the handover request message to the target eNB, where the handover request message includes the identification information of the terminal.

The handover request message may be used to notify that the terminal is handed over to the target eNB.

Optionally, the handover request message may further include the address information of the MEC network element.

An information element in the handover request message in step 601 and step 602 may be set in a source to target transparent container (Source to Target Transparent Container) information element of the two messages. In this way, the MME may not parse a specific information element in the message, and forward related information from the source eNB to the target eNB by using the transparent container information element.

603. After the target eNB receives the handover request message, the target eNB obtains address information of the MEC network element, and sends a session modification request message to the MEC network element based on the address information of the MEC network element, where the session modification request message includes address information of the target eNB.

Optionally, the session modification request message may further include the identification information of the terminal. The MEC network element can identify, based on the identification information of the terminal, the terminal on which the handover is performed, and the MEC network element may send a downlink data packet of the terminal to the target eNB.

Optionally, when the handover request message in step 602 further includes the address information of the MEC network element, the target eNB may obtain the address information of the MEC network element from the handover request message.

Optionally, the target eNB may alternatively use another method to obtain the address information of the MEC network element, and details are not described herein.

604. After receiving the session modification request message, the MEC network element changes stored address information of the source eNB to the address information of the target eNB, and sends a session modification response message to the target eNB.

605. The target eNB sends a handover request acknowledgement message to the MME.

606. The target eNB sends a handover command message to the source eNB.

In this case, the terminal is successfully handed over to the target eNB, and a data transmission channel is established between the target eNB and the MEC network element. The data stream is transmitted between the MEC network element and the target eNB.

It should be noted that message names in step 601 to step 604 are not limited in this embodiment of the present invention, and other message names may be alternatively used.

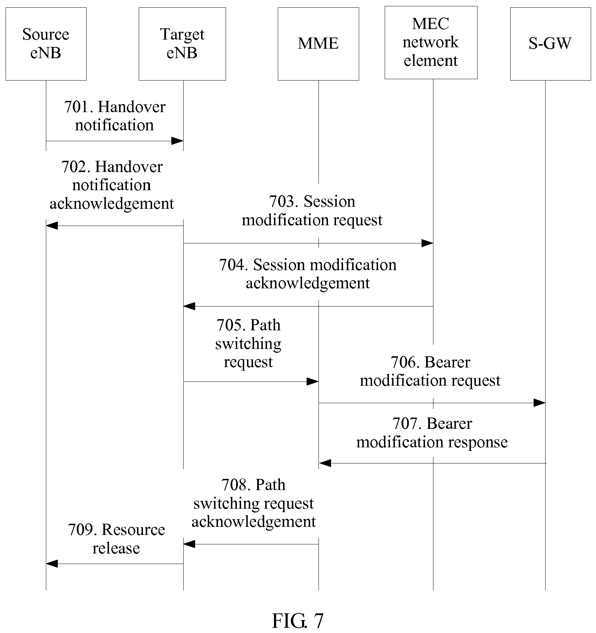

With reference to FIG. 7 to FIG. 10A and FIG. 10B, the following describes in detail application of the communication method in the handover process according to this embodiment of the present invention in the scenario shown in FIG. 2B.

In the scenario shown in FIG. 2B, when the terminal is handed over from the source eNB to the target eNB, correspondingly, an S-GW may or may not change. Likewise, the MME may or may not change. In other words, an S-GW corresponding to the source eNB may be the same as or may be different from an S-GW corresponding to the target eNB, and an MME corresponding to the source eNB may be the same as or may be different from an MME corresponding to the target eNB.

FIG. 7 is a schematic diagram of still another communication method 700 in a handover process according to an embodiment of the present invention. The communication method 700 may be applied to a system architecture in which an X2 interface exists between a source eNB and a target eNB, and an S-GW is not changed in a cell handover process, in other words, the source eNB and the target eNB are corresponding to a same S-GW.

For steps 701 to 704, refer to steps 501 to step 504 in the communication method 500. To avoid repetition, details are not described herein again.

705. The target eNB sends a path switching request message to an MME, where the path switching request message includes the address information of the MEC network element.

The address information of the MEC network element is a destination address used when the S-GW sends a data stream to the MEC network element, and includes an IP address of the MEC network element. Optionally, when a tunnel connection based on a GTP exists between the S-GW and the MEC network element, the address information of the MEC network element may further include a TEID of the MEC network element.

The address information of the MEC network element may be the same as the address information of the MEC network element when the connection is initially established.

706. The MME sends a bearer modification request message to the S-GW, where the bearer modification request message includes the address information of the MEC network element.

In the prior art, the bearer modification request message sent by the MME to the S-GW includes address information of an access network eNB. In this embodiment of the present invention, the MME uses the address information of the MEC network element as the address information of the access network eNB, and sends the address information of the MEC network element to the S-GW. Therefore, for the S-GW, the received address information of the access network eNB is actually the address information of the MEC network element. Correspondingly, that the S-GW sends data to the access network eNB is actually sending the data to the MEC network element.

707. The S-GW sends a bearer modification response message to the MME.

In this case, a user plane downlink data transmission channel between the S-GW and the MEC network element may be established, and the S-GW may send a downlink data stream of the terminal to the MEC network element.

708. The MME sends a path switching request acknowledgement message to the target eNB.

709. The target eNB sends a resource release request message to the source eNB.

It should be noted that message names in step 701 to step 704 are not limited in this embodiment of the present invention, and other message names may be alternatively used. Step 705 to step 709 are corresponding to a prior-art handover process. A difference is as follows: In the prior art, a message of steps corresponding to step 705 and step 706 includes the address information of the target eNB; however, in the present invention, to ensure that the S-GW sends the data packet to the MEC network element, step 705 and step 706 include the address information of the MEC network element.

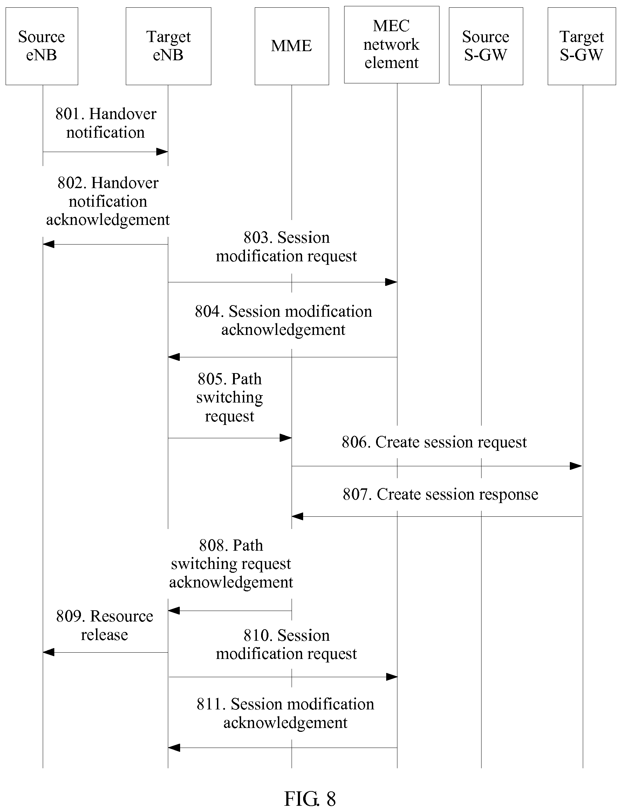

FIG. 8 is a schematic flowchart of still another communication method 800 in a handover process according to an embodiment of the present invention. The communication method 800 may be applied to a system architecture in which an X2 interface exists between a source eNB and a target eNB, and an S-GW is changed in a cell handover process, in other words, the source eNB and the target eNB are corresponding to different S-GWs.

For steps 801 to 804, refer to steps 501 to 504 in the communication method 500, and for step 805, refer to step 705 in the communication method 700. To avoid repetition, details are not described herein again.

806. An MME sends a create session request message to a target S-GW, where the create session request message includes the address information of the MEC network element.

In the prior art, for the S-GW, received address information is address information of an access network eNB. In this embodiment of the present invention, the address information of the access network eNB that is received by the MME is the address information of the MEC network element. Therefore, in this step, the eNB address information sent by the MME to the S-GW is actually the address information of the MEC network element. In other words, the MME and the S-GW in this embodiment of the present invention may be the same as those in the prior art, are insensible to the MEC network element, and consider that the address information of the MEC network element is the address information of the eNB.

807. The target S-GW sends a create session response message to the MME, where the create session response message includes address information of the target S-GW.

The create session response message is used to instruct, by using the MME, the MEC network element to send an uplink data stream to an address identified by the address information of the target S-GW.

In this case, a user plane downlink data transmission channel between the target S-GW and the MEC network element may be established, and the target S-GW may send a downlink data stream of the terminal to the MEC network element. In other words, the target S-GW uses an address identified by the address information of the MEC network element as a destination address of a downlink data packet.

When an IP connection exists between the target S-GW and the MEC network element, the address information of the target S-GW includes an IP address of the S-GW; or when a tunnel connection based on a GTP exists between the target S-GW and the MEC network element, the address information of the target S-GW includes the IP address of the S-GW and a TEID. The address information is used to notify the MEC network element of the address to which the uplink data stream is sent.

808. The MME sends a path switching request acknowledgement message to the target eNB, where the switching request acknowledgement message includes the address information of the target S-GW.

809. The target eNB sends a resource release message to the source eNB.

810. The target eNB sends a session modification request message to the MEC network element, where the session modification request message includes the address information of the target S-GW.

The session modification request message is used to instruct the MEC network element to update the address information of the S-GW, and send a data packet to a correct S-GW.

811. After receiving the session modification request message, the MEC network element changes stored address information of a source S-GW to the address information of the target S-GW, so as to send the data packet to the correct S-GW; and sends a session modification acknowledgement message to the target eNB.

In this case, a user plane uplink data transmission channel between the MEC network element and the target S-GW may be established. The MEC network element may send an uplink data stream of the terminal to the target S-GW.

It should be noted that message names in steps 801 to 804 and steps 810 and 811 are not limited in this embodiment of the present invention.

In this embodiment of the present invention, steps 803 and 804 may be simultaneously performed with steps 810 and 811. In other words, after step 809, a connection is established between the target eNB and the MEC network element, and the MEC network element is notified of address information of the target eNB and address information of the target S-GW after the handover.

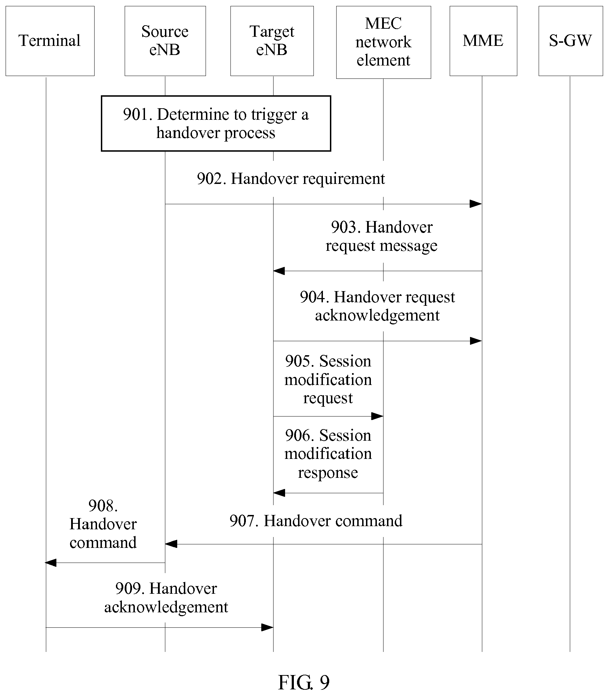

FIG. 9 is a schematic diagram of still another communication method 900 in a handover process according to an embodiment of the present invention. The communication method 900 may be applied to a system architecture in which no X2 interface exists between a source eNB and a target eNB, and both an MME and an S-GW in a process in which a terminal is handed over between cells are not changed.

901. The source eNB determines to initiate handover.

902. The source eNB sends a handover requirement message to the MME.

903. The MME sends a handover request message to the target eNB.

Optionally, the handover request message may include address information of a MEC network element.

Optionally, the handover request message may include identification information of the terminal.

904. The target eNB sends a handover request acknowledgement message to the MME, where the handover request acknowledgement message includes the address information of the MEC network element.

In the prior art, the message includes address information of the target eNB. In this embodiment of the present invention, address information of an eNB in the handover request acknowledgement message sent by the target eNB to the MME is actually the address information of the MEC network element. In other words, the MME in this embodiment of the present invention may be the same as that in the prior art, and the MME may consider the address information of the MEC network element as the address information of the eNB.

905. The target eNB sends a session modification request message to the MEC network element, where the session modification request message includes address information of the target eNB.

The session modification request message may be used to request the MEC network element to change stored address information of the source eNB to the address information of the target eNB.

Optionally, the session modification request message may further include the identification information of the terminal.

906. After receiving the session modification request message, the MEC network element changes the stored address information of the source eNB to the address information of the target eNB, and sends a session modification response message to the target eNB.

In this case, a user plane data transmission channel between the MEC network element and the target base station may be established, and a data stream of the terminal is transmitted between the MEC network element and the target eNB.

Steps 907 to 909 are the same as those in the prior art, and details are not described herein.

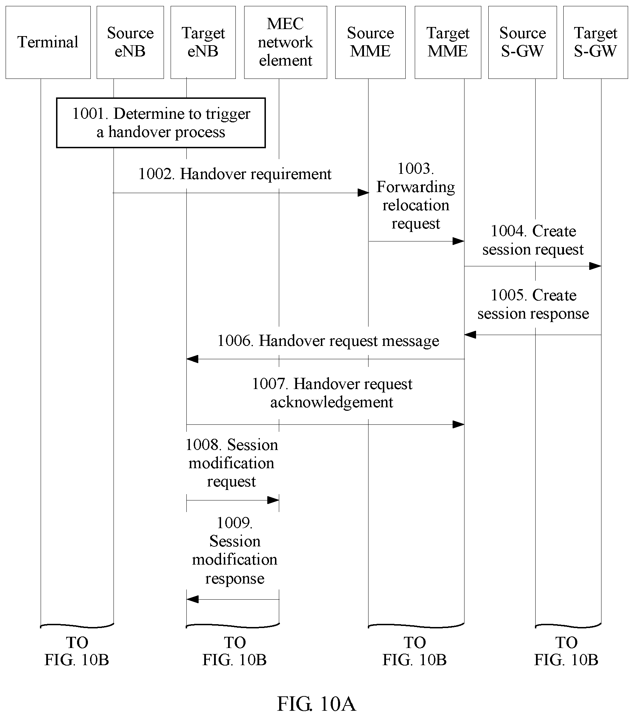

FIG. 10A and FIG. 10B are a schematic diagram of still another communication method 1000 in a handover process according to an embodiment of the present invention. The communication method 1000 may be applied to a system architecture in which no X2 interface exists between a source eNB and a target eNB, and both an MME and an S-GW in a process in which a terminal is handed over between cells are changed.

1001. The source eNB determines to initiate handover.

1002. The source eNB sends a handover requirement message to a source MME.

1003. The source MME sends a forwarding relocation request message to a target MME, where the forwarding relocation request message includes address information of a MEC network element.

It should be noted that according to the prior art, the forwarding relocation request message includes address information of a source eNB serving the terminal, and the address information includes an IP address of the source eNB and a TEID. However, in this embodiment of the present invention, when the terminal accesses a network, in order that the MEC network element is connected to an S1 interface in a serial manner, the address information of the eNB is actually the address information of the MEC network element.

Optionally, the forwarding relocation request message may further include identification information of the terminal.

1004. The target MME sends a create session request message to a target S-GW.

Optionally, the create session request message may include the address information of the MEC network element. In the prior art, the target MME sends the address information of the source eNB to the target S-GW. In this embodiment of the present invention, actually, the address information of the MEC network element is used as the address information of the source eNB and sent to the target S-GW.

1005. The target S-GW sends a create session response message to the target MME, where the create session response message includes address information of the target S-GW.

Optionally, if the create session request message in step 1004 includes the address information of the MEC network element, a user plane downlink data transmission channel between the target S-GW and the MEC network element may be established, and the target S-GW may send a downlink data stream of the terminal to the MEC network element.

The address information of the target S-GW includes an IP address of the S-GW and a TEID.

1006. The target MME sends a handover request message to the target eNB, where the handover request message includes the address information of the target S-GW.

Optionally, the handover request message may further include the address information of the MEC network element.

1007. The target eNB sends a handover request acknowledgement message to the target MME, where the handover request acknowledgement message includes the address information of the MEC network element.

In the prior art, the message includes address information of the target eNB. However, to ensure that the S-GW sends a data packet to the MEC network element, the message needs to include the address information of the MEC network element.

1008. The target eNB sends a session modification request message to the MEC network element, where the session modification request message includes the address information of the target eNB and the address information of the target S-GW.

The session modification request message may further include the identification information of the terminal.

1009. After receiving the session modification request message, the MEC network element changes the stored address information of the source eNB to the address information of the target eNB, changes address information of the source S-GW to the address information of the target S-GW, and sends a session modification response message to the target eNB.

In this case, a user plane data transmission channel between the MEC network element and the target base station may be established, and a user plane uplink data transmission channel between the MEC network element and the target S-GW may further be established. The MEC network element may send an uplink data stream of the terminal to the target S-GW.

Steps 1010 to 1016 are the same as those in the prior art, and details are not described herein.

1017. The target MME sends a bearer modification request message to the target S-GW.

Optionally, the bearer modification request message may include the address information of the MEC network element. In the prior art, the target MME sends the address information of the target eNB to the target S-GW. In this embodiment of the present invention, actually, the address information of the MEC network element is used as the address information of the target eNB and sent to the target S-GW.

In other words, the target MME may send the address information of the MEC network element to the target S-GW by using the create session request message in step 1004 or the bearer modification request message in step 1017.

1018. The target S-GW sends a bearer modification response message to the target MME.

It should be understood that the MME and the S-GW in this embodiment of the present invention may be the same as those in the prior art, and the MME and the S-GW may consider the address information of the MEC network element as the address information of the eNB.

It should be noted that the embodiment shown in FIG. 10A and FIG. 10B includes a processing process when both the MME and the S-GW are changed. If the MME is not changed, and the S-GW is changed, a part related to the target MME in the procedure shown in FIG. 10A and FIG. 10B should be deleted, and details are not described herein.

It should be understood that sequence numbers of the foregoing processes do not mean execution sequences. The execution sequences of the processes should be determined based on functions and internal logic of the processes, and should not be construed as any limitation on the implementation processes of the embodiments of the present invention.

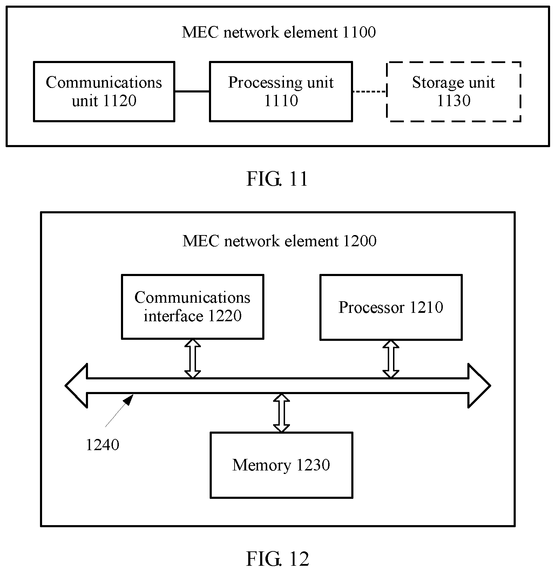

Detailed description of the communication method in a handover process according to the embodiments of the present invention is provided in the foregoing with reference to FIG. 4 to FIG. 10A and FIG. 10B, and detailed description of a communications apparatus according to the embodiments of the present invention is provided in the following with reference to FIG. 11 to FIG. 14.

The foregoing mainly describes the solutions in the embodiments of the present invention from the perspective of interaction between network elements. It may be understood that, to implement the foregoing functions, the network elements such as an access network device and a MEC network element include a corresponding hardware structure and/or software module for performing the functions. A person of ordinary skill in the art should be easily aware that, the units and algorithm steps in the examples described with reference to the embodiments disclosed in this specification may be implemented by hardware or a combination of hardware and computer software in the present invention. Whether a function is performed by hardware or computer software driving hardware depends on particular applications and design constraint conditions of the technical solutions. A person skilled in the art may use different methods to implement the described functions for each particular application, but it should not be considered that the implementation goes beyond the scope of the present invention.

In this embodiment of the present invention, the access network device, the MEC network element, and the like may be divided into functional units based on the foregoing method example. For example, each functional unit may be obtained through division according to each function, or two or more functions may be integrated into one processing unit. The integrated unit may be implemented in a form of hardware, or may be implemented in a form of a software functional unit. It should be noted that the unit division in the embodiments of the present invention is an example, and is merely logical function division. There may be another division manner in an actual implementation.

When the integrated unit is used, FIG. 11 is a schematic structural diagram of a possible MEC network element involved in the foregoing embodiment. The MEC network element 1100 includes a processing unit 1110 and a communications unit 1120. The processing unit 1110 is configured to perform control and management on an action of the MEC network element. For example, the processing unit 1110 is configured to support the MEC network element in executing the process 330 in FIG. 3, the process 403 in FIG. 4, the process 504 in FIG. 5, the process 604 in FIG. 6, the process 704 in FIG. 7, the process 804 and the process 811 in FIG. 8, the process 906 in FIG. 9, the process 1009 in FIG. 10A and FIG. 10B and/or other processes of the technology described in this specification. The communications unit 1120 is configured to support the MEC network element in communicating with another network entity, for example, communicating with the eNB, the S-GW, or the like shown in FIG. 2A or FIG. 2B. The MEC network element may further include a storage unit 1130, configured to store program code and data of the MEC network element.

The processing unit 1110 may be a processor or a controller, for example, may be a central processing unit (Central Processing Unit, CPU), a general purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing unit 1110 may implement or execute various examples of logical blocks, modules, and circuits that are described with reference to the content disclosed in the present invention. The processor may also be a combination for implementing computing functions, for example, a combination of one or more microprocessors or a combination of a DSP and a microprocessor. The communications unit 1120 may be a communications interface, a transceiver, a transceiver circuit, or the like. The communications interface is a general name and may include one or more interfaces. The storage unit 1130 may be a memory.

When the processing unit 1110 is the processor, the communications unit 1120 is the communications interface, and the storage unit 1130 is the memory, the MEC network element involved in this embodiment of the present invention may be the MEC network element shown in FIG. 12.

Referring to FIG. 12, the MEC network element 1200 includes a processor 1210, a communications interface 1220, and a memory 1230. Optionally, the MEC network element 1200 may further include a bus 1240. The communications interface 1220, the processor 1210, and the memory 1230 may be connected with each other by using the bus 1240. The bus 1240 may be a Peripheral Component Interconnect (Peripheral Component Interconnect, PCI for short) bus or an extended industry standard architecture (Extended Industry Standard Architecture, EISA for short) bus, or the like. The bus 1240 may be categorized as an address bus, a data bus, a control bus, or the like. For ease of indication, the bus is indicated by using only one line in FIG. 12. However, it does not indicate that there is only one bus or only one type of bus.

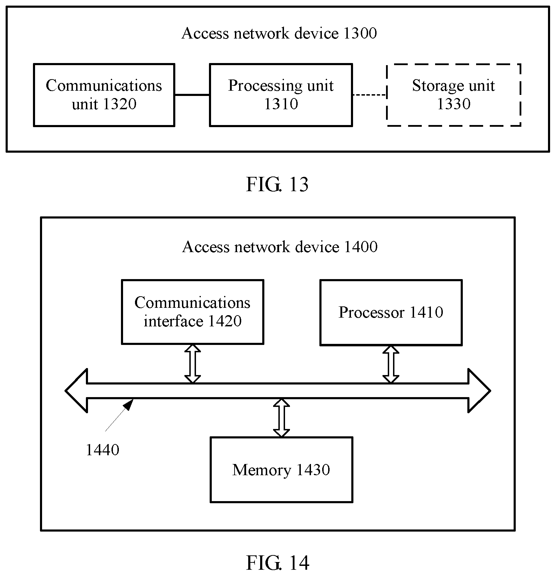

FIG. 13 shows a schematic structural diagram of a possible access network device involved in the foregoing embodiment. The access network device 1300 includes a processing unit 1310 and a communications unit 1320. The processing unit 1310 is configured to perform control and management on an action of the access network device. For example, the processing unit 1310 is configured to support the access network device in executing the process 401 and the process 402 in FIG. 4, the process 503 in FIG. 5, the process 603 in FIG. 6, the process 703 in FIG. 7, the process 803 and the process 810 in FIG. 8, the process 905 in FIG. 9, the process 1008 in FIG. 10A and FIG. 10B and/or other processes of the technology described in this specification. The communications unit 1320 is configured to support the access network device in communicating with another network entity, for example, communicating with the MEC, the MME, and the S-GW shown in FIG. 2A or FIG. 2B. The access network device may further include a storage unit 1330, configured to store program code and data of a communications device.

The processing unit 1310 may be a processor or a controller, for example, may be a CPU, a general purpose processor, a DSP, an ASIC, an FPGA or another programmable logic device, a transistor logic device, a hardware component, or any combination thereof. The processing unit 1310 may implement or execute various examples of logical blocks, modules, and circuits that are described with reference to the content disclosed in the present invention. The processor may also be a combination for implementing computing functions, for example, a combination of one or more microprocessors or a combination of a DSP and a microprocessor. The communications unit 1320 may be a communications interface, a transceiver, a transceiver circuit, or the like. The communications interface is a general name and may include one or more interfaces. The storage unit 1330 may be a memory.

When the processing unit 1310 is the processor, the communications unit 1320 is the communications interface, and the storage unit 1330 is the memory, the access network device in this embodiment of the present invention may be the access network device shown in FIG. 14.

Referring to FIG. 14, the access network device 1400 includes a processor 1414, a communications interface 1420, and a memory 1430. Optionally, the communications device 1400 may further include a bus 1440. The communications interface 1420, the processor 1414, and the memory 1430 may be connected to each other by using the bus 1440, and the bus 1440 may be a PCI bus, an EISA bus, or the like. The bus 1440 may be categorized as an address bus, a data bus, a control bus, or the like. For ease of indication, the bus is indicated by using only one line in FIG. 14. However, it does not indicate that there is only one bus or only one type of bus.

The methods or algorithm steps described with reference to the content disclosed in the embodiments of the present invention may be implemented in a hardware manner, or may be implemented in a manner of executing a software instruction by a processor. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. A storage medium used as an example is coupled to the processor. Therefore, the processor can read information from the storage medium, and can write information into the storage medium. Certainly, the storage medium may be a part of the processor. The processor and the storage medium may be located in an ASIC. In addition, the ASIC may be located in a gateway device or a mobility management network element. Certainly, the processor and the storage medium may exist in the gateway device or the mobility management network element as discrete components.

A person skilled in the art should be aware that in one or more of the foregoing examples, the functions described in the embodiments of the present invention may be implemented by using hardware, software, firmware, or any combination thereof. When implemented by using software, these functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general or dedicated computer.

## Claims

1. A communication method in a handover process, comprising:
when a terminal is handed over from a source access network device to a target access network device, receiving, by a Mobile Edge Computing, MEC, network element, address information of the target access network device that is sent by the target access network device; and
changing, by the MEC network element, stored address information of the source access network device to the address information of the target access network device, wherein the receiving, by a MEC network element, address information of the target access network device that is sent by the target access network device comprises:
receiving, by the MEC network element, a message sent by the target access network device, wherein the message carries the address information of the target access network device, and the message further carries address information of a gateway device corresponding to the target access network device; and
the communication method further comprises:
changing, by the MEC network element, stored address information of a gateway device corresponding to the source access network device to the address information of the gateway device corresponding to the target access network device.

2. A communication method in a handover process, comprising:
when a terminal is handed over from a source access network device to a target access network device, obtaining (401), by the target access network device, address information of a Mobile Edge Computing MEC network element; and
sending (402), by the target access network device, address information of the target access network device to the MEC network element based on the address information of the MEC network element, so that the MEC network element changes stored address information of the source access network device to the address information of the target access network device, further comprising:
notifying, by the target access network device through a mobility management network element, a gateway device corresponding to the target access network device of the address information of the MEC network element.

3. The communication method according to claim 2, further comprising:
sending, by the target access network device to the MEC network element, address information of a gateway device corresponding to the target access network device, so that the MEC network element changes stored address information of a gateway device corresponding to the source access network device to the address information of the gateway device corresponding to the target access network device.

4. The communication method according to claim 2 or 3 wherein the obtaining, by the target access network device, address information of a MEC network element comprises:
receiving, by the target access network device, the address information of the MEC network element that is sent by the source access network device; or
receiving, by the target access network device, the address information of the MEC network element that is sent by a mobility management network element.

5. A Mobile Edge Computing, MEC, network element (1100), comprising a processing unit (1110) and a communications unit (1120), wherein
the processing unit (1100) is configured to: when a terminal is handed over from a source access network device to a target access network device, receive, by using the communications unit (1120), address information of the target access network device that is sent by the target access network device; and change stored address information of the source access network device to the address information of the target access network device, wherein
the processing unit (1100) is specifically configured to: receive, by using the communications unit, a message sent by the target access network device, wherein the message carries the address information of the target access network device, and the message further carries address information of a gateway device corresponding to the target access network device; and change stored address information of a gateway device corresponding to the source access network device to the address information of the gateway device corresponding to the target access network device.

6. An access network device (1300), comprising a processing unit (1310) and a communications unit (1320), wherein
the processing unit (1310) is configured to: when a terminal is handed over from a source access network device to the access network device, obtain, by using the communications unit (1320), address information of a Mobile Edge Computing MEC network element; and send, by using the communications unit, address information of the access network device to the MEC network element based on the address information of the MEC network element, enabling the MEC network element to change stored address information of the source access network device to the address information of the target access network device, wherein the processing unit (1310) is further configured to notify, through a mobility management network element, a gateway device corresponding to the target access network device of the address information of the MEC network element.

7. The access network device according to claim 6, wherein the processing unit (1310) is further configured to send, to the MEC network element by using the communications unit, address information of a gateway device corresponding to the target access network device, enabling the MEC network element to change stored address information of a gateway device corresponding to the source access network device to the address information of the gateway device corresponding to the target access network device.

8. The access network device according to claim 6 or 7, wherein the processing unit (1310) is specifically configured to receive, by using the communications unit, the address information of the MEC network element that is sent by the source access network device; or the processing unit (1310) is specifically configured to receive, by using the communications unit, the address information of the MEC network element that is sent by a mobility management network element.

## Patentansprüche

1. Kommunikationsverfahren bei einem Übergabevorgang, das Folgendes umfasst:
wenn ein Endgerät von einem Quellenzugangsnetzgerät an ein Zielzugangsnetzgerät übergeben wird, Empfangen von Adressangaben des Zielzugangsnetzgeräts, die vom Zielzugangsnetzgerät gesendet werden, durch ein Mobile Edge Computing-, MEC-Netzelement; und
Ändern der gespeicherten Adressangaben des Quellenzugangsnetzgeräts in die Adressangaben des Zielzugangsnetzgeräts durch das MEC-Netzelement, wobei das Empfangen von Adressangaben des Zielzugangsnetzgeräts, die vom Zielzugangsnetzgerät gesendet werden, durch ein MEC-Netzelement Folgendes umfasst:
Empfangen einer vom Zielzugangsnetzgerät gesendeten Meldung durch das MEC-Netzelement, wobei die Meldung die Adressangaben des Zielzugangsnetzgeräts und ferner Adressangaben eines dem Zielzugangsnetzgerät entsprechenden Gateway-Geräts enthält; und das Kommunikationsverfahren ferner Folgendes umfasst:
Ändern von gespeicherten Adressangaben eines dem Quellenzugangsnetzgerät entsprechenden Gateway-Geräts in die Adressangaben des dem Zielzugangsnetzgerät entsprechenden Gateway-Geräts durch das MEC-Netzelement.

2. Kommunikationsverfahren bei einem Übergabevorgang, das Folgendes umfasst:
wenn ein Endgerät von einem Quellenzugangsnetzgerät an ein Zielzugangsnetzgerät übergeben wird, Einholen (401) von Adressangaben eines Mobile Edge Computing-, MEC-Netzelements durch das Zielzugangsnetzgerät; und
Senden (402) von Adressangaben des Zielzugangsnetzgeräts durch das Zielzugangsnetzgerät an das MEC-Netzelement anhand der Adressangaben des MEC-Netzelements, sodass das MEC-Netzelement gespeicherte Adressangaben des Quellenzugangsnetzgeräts in Adressangaben des Zielzugangsnetzgeräts ändert, ferner umfassend:
Benachrichtigen eines dem Zielzugangsnetzgerät entsprechenden Gateway-Geräts über die Adressangaben des MEC-Netzelements durch das Zielzugangsnetzgerät durch ein Mobilitätsmanagement-Netzelement.

3. Kommunikationsverfahren nach Anspruch 2, das ferner Folgendes umfasst:
Senden von Adressangaben eines dem Zielzugangsnetzgerät entsprechenden Gateway-Geräts durch das Zielzugangsnetzgerät an das MEC-Netzelement, sodass das MEC-Netzelement die gespeicherten Adressangaben eines dem Quellenzugangsnetzgerät entsprechenden Gateway-Geräts in die Adressangaben des dem Zielzugangsnetzgerät entsprechenden Gateway-Geräts ändert.

4. Kommunikationsverfahren nach Anspruch 2 oder 3, wobei das Einholen von Adressangaben eines MEC-Netzelements durch das Zielzugangsnetzgerät Folgendes umfasst:
Empfangen der Adressangaben des MEC-Netzelements, die von dem Quellenzugangsnetzgerät gesendet werden, durch das Zielzugangsnetzgerät; oder
Empfangen der Adressangaben des MEC-Netzelements, die von einem Mobilitätsmanagement-Netzelement gesendet werden, durch das Zielzugangsnetzgerät.

5. Mobile Edge Computing-, MEC-Netzelement (1100), das eine Verarbeitungseinheit (1110) und eine Kommunikationseinheit (1120) umfasst, wobei
die Verarbeitungseinheit (1100) zu Folgendem konfiguriert ist: wenn ein Endgerät von einem Quellenzugangsnetzgerät an ein Zielzugangsnetzgerät übergeben wird, Empfangen von Adressangaben des Zielzugangsnetzgeräts, die vom Zielzugangsnetzgerät gesendet werden, unter Verwendung der Kommunikationseinheit (1120); und Ändern von gespeicherten Adressangaben des Quellenzugangsnetzgeräts in die Adressangaben des Zielzugangsnetzgeräts, wobei
die Verarbeitungseinheit (1100) speziell zu Folgendem konfiguriert ist: Empfangen einer vom Zielzugangsnetzgerät gesendeten Meldung unter Verwendung der Kommunikationseinheit, wobei die Meldung die Adressangaben des Zielzugangsnetzgeräts und ferner Adressangaben eines dem Zielzugangsnetzgerät entsprechenden Gateway-Geräts enthält; und Ändern der gespeicherten Adressangaben eines dem Quellenzugangsnetzgerät entsprechenden Gateway-Geräts in die Adressangaben des dem Zielzugangsnetzgerät entsprechenden Gateway-Geräts.

6. Zugangsnetzgerät (1300), das eine Verarbeitungseinheit (1310) und eine Kommunikationseinheit (1320) umfasst, wobei die Verarbeitungseinheit (1310) zu Folgendem konfiguriert ist:
wenn ein Endgerät von einem Quellenzugangsnetzgerät an das Zugangsnetzgerät übergeben wird, Einholen von Adressangaben eines Mobile Edge Computing-, MEC-Netzelements unter Verwendung der Kommunikationseinheit (1320); und Senden von Adressangaben des Zugangsnetzgeräts an das MEC-Netzelement anhand der Adressangaben des MEC-Netzelements unter Verwendung der Kommunikationseinheit, wodurch das MEC-Netzelement in die Lage versetzt wird, die gespeicherten Adressangaben des Quellenzugangsnetzgeräts in die Adressangaben des Zielzugangsnetzgeräts zu ändern, wobei die Verarbeitungseinheit (1310) ferner dazu konfiguriert ist, ein dem Zielzugangsnetzgerät entsprechendes Gateway-Gerät durch ein Mobilitätsmanagement-Netzelement über die Adressangaben des MEC-Netzelements zu benachrichtigen.

7. Zugangsnetzgerät nach Anspruch 6, wobei die Verarbeitungseinheit (1310) ferner dazu konfiguriert ist, Adressangaben eines dem Zielzugangsnetzgerät entsprechenden Gateway-Geräts unter Verwendung der Kommunikationseinheit an das MEC-Netzelement zu senden, wodurch das MEC-Netzelement in die Lage versetzt wird, die gespeicherten Adressangaben eines dem Quellenzugangsnetzgerät entsprechenden Gateway-Geräts in die Adressangaben des dem Zielzugangsnetzgerät entsprechenden Gateway-Geräts zu ändern.

8. Zugangsnetzgerät nach Anspruch 6 oder 7, wobei die Verarbeitungseinheit (1310) speziell dazu konfiguriert ist, die Adressangaben des MEC-Netzelements, die vom Quellenzugangsnetzgerät gesendet werden, unter Verwendung der Kommunikationseinheit zu empfangen; oder die Verarbeitungseinheit (1310) speziell dazu konfiguriert ist, die Adressangaben des MEC-Netzelements, die von einem Mobilitätsmanagement-Netzelement gesendet werden, unter Verwendung der Kommunikationseinheit zu empfangen.

## Revendications

1. Procédé de communication dans un processus de transfert, comprenant :
lorsqu'un terminal est transféré d'un périphérique réseau d'accès source à un périphérique réseau d'accès cible, la réception, par un élément de réseau Mobile Edge Computing, MEC, des informations d'adresse du périphérique réseau d'accès cible qui sont envoyées par le périphérique réseau d'accès cible ; et le changement, par l'élément de réseau MEC, des informations d'adresse stockées du périphérique réseau d'accès source en informations d'adresse du périphérique réseau d'accès cible, dans lequel la réception, par un élément de réseau MEC, des informations d'adresse du périphérique réseau d'accès cible qui sont envoyées par le périphérique réseau d'accès cible comprend :
la réception, par l'élément de réseau MEC, d'un message envoyé par le périphérique réseau d'accès cible, dans lequel le message achemine les informations d'adresse du périphérique réseau d'accès cible, et le message achemine en outre les informations d'adresse d'une passerelle correspondant au périphérique réseau d'accès cible ; et
le procédé de communication comprend en outre :
le changement, par l'élément de réseau MEC, des informations d'adresse stockées d'une passerelle correspondant au périphérique réseau d'accès source en informations d'adresse de la passerelle correspondant au périphérique réseau d'accès cible.

2. Procédé de communication dans un processus de transfert, comprenant :
lorsqu'un terminal est transféré d'un périphérique réseau d'accès source à un périphérique réseau d'accès cible, l'obtention (401), par le périphérique réseau d'accès cible, des informations d'adresse d'un élément de réseau Mobile Edge Computing MEC ; et
l'envoi (402), par le périphérique réseau d'accès source, des informations d'adresse du périphérique réseau d'accès cible à l'élément de réseau MEC sur la base des informations d'adresse de l'élément de réseau MEC, de sorte que l'élément de réseau MEC change les informations d'adresse stockées du périphérique réseau d'accès source en informations d'adresse du périphérique réseau d'accès cible, comprenant en outre :
la notification, par le périphérique réseau d'accès cible, à travers un élément de réseau de gestion de mobilité, d'une passerelle correspondant au périphérique réseau d'accès cible des informations d'adresse de l'élément de réseau MEC.

3. Procédé de communication selon la revendication 2, comprenant en outre :
l'envoi, par le périphérique réseau d'accès cible à l'élément de réseau MEC, des informations d'adresse d'une passerelle correspondant au périphérique réseau d'accès cible, de sorte que l'élément de réseau MEC change les informations d'adresse stockées d'une passerelle correspondant au périphérique réseau d'accès source en informations d'adresse de la passerelle correspondant au périphérique réseau d'accès cible.

4. Procédé de communication selon la revendication 2 ou 3, dans lequel l'obtention, par le périphérique réseau d'accès cible, des informations d'adresse d'un élément de réseau MEC comprend :
la réception, par le périphérique réseau d'accès cible, des informations d'adresse de l'élément de réseau MEC qui sont envoyées par le périphérique réseau d'accès source ; ou
la réception, par le périphérique réseau d'accès cible, des informations d'adresse de l'élément de réseau MEC qui sont envoyées par un élément de réseau de gestion de mobilité.

5. Élément de réseau Mobile Edge Computing, MEC, (1100) comprenant une unité de traitement (1110) et une unité de communication (1120), dans lequel
l'unité de traitement (1100) est configurée pour : lorsqu'un terminal est transféré d'un périphérique réseau d'accès source à un périphérique réseau d'accès cible, recevoir, en utilisant l'unité de communication (1120), des informations d'adresse du périphérique réseau d'accès cible qui sont envoyées par le périphérique réseau d'accès cible ; et changer des informations d'adresse stockées du périphérique réseau d'accès source en informations d'adresse du périphérique réseau d'accès cible, dans lequel
l'unité de traitement (1100) est configurée spécialement pour : recevoir, en utilisant l'unité de communication, un message envoyé par le périphérique réseau d'accès cible, dans lequel le message achemine les informations d'adresse du périphérique réseau d'accès cible, et le message achemine en outre les informations d'adresse d'une passerelle correspondant au périphérique réseau d'accès cible ; et changer les informations d'adresse stockées d'une passerelle correspondant au périphérique réseau d'accès source en informations d'adresse de la passerelle correspondant au périphérique réseau d'accès cible.

6. Périphérique réseau d'accès (1300), comprenant une unité de traitement (1310) et une unité de communication (1320), dans lequel
l'unité de traitement (1310) est configurée pour : lorsqu'un terminal est transféré d'un périphérique réseau d'accès source au périphérique réseau d'accès, obtenir, en utilisant l'unité de communication (1320), les informations d'adresse d'un élément de réseau Mobile Edge Computing MEC ; et envoyer, en utilisant l'unité de communication, les informations d'adresse du périphérique réseau d'accès à l'élément de réseau MEC sur la base des informations d'adresse de l'élément de réseau MEC, en permettant à l'élément de réseau MEC de changer les informations d'adresse stockées du périphérique réseau d'accès source en informations d'adresse du périphérique réseau d'accès cible, dans lequel l'unité de traitement (1310) est en outre configurée pour notifier, à travers un élément de réseau de gestion de mobilité, une passerelle correspondant au périphérique réseau d'accès cible des informations d'adresse de l'élément de réseau MEC.

7. Périphérique réseau d'accès selon la revendication 6, dans lequel l'unité de traitement (1310) est en outre configurée pour envoyer, à l'élément de réseau MEC en utilisant l'unité de communication, les informations d'adresse d'une passerelle correspondant au périphérique réseau d'accès cible, en permettant à l'élément de réseau MEC de changer les informations d'adresse stockées d'une passerelle correspondant au périphérique réseau d'accès source en informations d'adresse de la passerelle correspondant au périphérique réseau d'accès cible.

8. Périphérique réseau d'accès selon la revendication 6 ou 7, dans lequel l'unité de traitement (1310) est spécialement configurée pour recevoir, en utilisant l'unité de communication, les informations d'adresse de l'élément de réseau MEC qui sont envoyées par le périphérique réseau d'accès source ; ou l'unité de traitement (1310) est configurée spécialement pour recevoir, en utilisant l'unité de communication, les informations d'adresse de l'élément de réseau MEC qui sont envoyées par un élément de réseau de gestion de mobilité.
